# EUROPEAN PATENT SPECIFICATION

(11) **EP 2 907 692 B1**
(45) Date of publication and mention of the grant of the patent: **04.05.2016**
(21) Application number: 15150425.5
(22) Date of filing: 08.01.2015
(51) Int. Cl.: B60N 2/28

(54) **Child seat with lateral head protection**
Kindersitz mit Seitenkopfschutz
Siège enfant avec protection latérale de tête

(30) Priority: 30.01.2014 PL 40699914
(43) Date of publication of application: 19.08.2015
(73) Proprietor: Przemyslowy Instytut Motoryzacji, 03-301 Warszawa (PL)
(72) Inventor: Muszynski, Andrzej, 05-850 Szeligi (PL); Muszynski, Artur, 05-850 Szeligi (PL); Zielonka, Karol, 02-495 Warszawa (PL); Lisiecki, Szymon, 05-092 Warszawa (PL)
(74) Representative: Sielewiesiuk, Jakub

(56) References cited:
- EP-A2- 1 486 384
- DE-U1- 9 405 366
- FR-A1- 2 986 195
- US-A1- 2004 164 529

## Description

This invention relates to a child car seat (safety seat) provided with a device to reduce child's head displacement caused by a side impact of the motor vehicle. The device is an integral part of the safety seat that restrains the child sitting in the motor vehicle. It also reduces the value of child's head displacement in relation to the torso and reduces the probability of child's head hitting the vehicle body structure during a road accident when a side impact of the vehicle takes place.

A reduction of the dynamic loads acting onto the child during a side impact of the vehicle is particularly important in the case of small children, who are far more susceptible to dynamic loads in comparison with the adults. This is because of unfavourable proportions of the child's body. This particularly applies to the proportion of head dimensions and mass to the dimensions and mass of the whole body, e.g. in a two-year-old child, the ratio of head "length" to the total body length is 1/5 while this ratio in a young boy or girl aged 15 years is 1/7. The mass of the head of a new-born baby makes as much as 25 % of the total body mass (as against 6 % for the adult). This in combination with the weak spine, especially the cervical vertebras, of the child causes a possibility of severe injuries that might occur in the case of even insignificant decelerations during a road accident. On the other hand, even small head injuries in a little child may cause brain injuries because the joints between cranial bones have not been ossified yet (fontanelle).

The strength of the osseous system of a small child, where cartilaginous tissue predominates, is much lower than that of the adults.

The engineering design solutions of the child restraint systems proposed at present offer a relatively low degree of protection from the threats that might occur during a side impact. This is because the type-approval requirements (i.e. the requirements that must be met by a device so that it might be used in vehicles and marketed) applicable until quite recently to the child restraint systems were defined with only frontal collision test results being taken as a basis. The new UN ECE Regulation No. 129, according to which type-approval tests of child restraint systems are carried out, includes side impact test requirements.

Only a few manufacturers of child car seats offer enhanced child's head protection against side impact by introducing an additional energy-absorbing element incorporated in the side structure of the child safety seat.

Such elements are known e.g. from publications "Child car seat and headrest with side impact energy absorption" US 8690237 B2 and "Juvenile seating with resilient side impact protection" US 7726734 B2 as well as from products marketed by such manufacturers as Maxi Cosi Rodi AirProtect or Romer Kid Plus Side Impact Cushion Technology. In each of the cases shown, however, the said additional element has fixed geometry and it does not offer active protection of child's head in case of vehicle collision, especially side impact.

In US 2004/164529 A1 to Yoshida Ryoichi a child seat is disclosed including a seat body having a seat portion, a backrest, and left and right side guards, an airbag provided adjacent to the seat body for receiving the child upon inflation thereof, and an inflating device communicating with the airbag for inflating the airbag. Each of the left and right side guards of the child seat can comprise a respective flexible protecting element and a movable element arranged at the outward side of the corresponding protecting element.

Furthermore, FR 2 986 195 A to Dorel France SA discloses a child car seat comprising a seat bottom and a seat back provided with side flanks and a headrest having a back portion, substantially parallel to the seat back, and two side cheeks extending from said back portion. The seat comprises means for controlling a predetermined safety displacement of at least one portion of the side cheeks, in the event of a side impact against the seat, referred to as a violent impact, from a first transport position to a second safety position, wherein the mobile portion of the cheek is moved closer to the child's head.

Yet further, in DE 94 05 366 U1 to Docter Klemens a child seat is disclosed comprising a seating surface, a backrest and a head rest provided with at least one adjustable supporting device, which in a starting position is spaced apart from the head and in a safety position at least partially extends to the towards the head, and the supporting device is connected to an actuator, which is actuated by a collision sensor.

The safety seat the invention relates to is intended for children with a body mass of 9-36 kg (a mass classification group defined for type-approval purposes). The seat includes a C-shaped flexible element made with the use of energy-absorbing material and movable elements mounted in the side walls of the safety seat, situated at the height of child's head and capable of rotating around an axis perpendicular or almost perpendicular to the bottom plane of the safety seat. During a road accident (impact against a vehicle side), the flexible element made with the use of energy-absorbing material, which may come into direct contact with the child's head, becomes deformed under the influence of the movable rotary elements mounted in the side walls of the safety seat, which makes it possible to reduce the probability of injury to the child's head and cervical vertebras during the accident, because the deformation of the flexible element reduces the possibilities of free movement of the child's head.

The invention will now be further illustrated in the preferred embodiment, with reference to the accompanying drawings, in which:

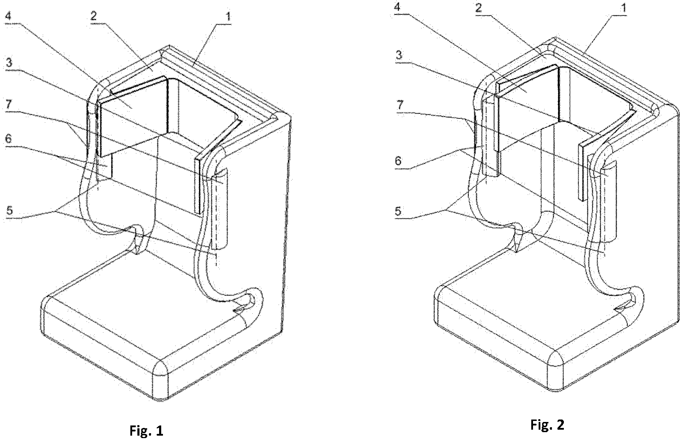

Fig. 1 shows a general view and the relative positions of elements of the safety seat during normal use (normal drive), and
Fig. 2 shows the relative positions of elements of the safety seat after an impact against a side of the vehicle in which a child was sitting in the safety seat.

The following indications were used in the drawings: 1 - safety seat, 2 - protecting element, 3 - side protecting element, left, 4 - side protecting element, right, 5 - axis of rotation, perpendicular or almost perpendicular to the bottom plane of the safety seat, 6 - movable element, which is a part of the side structure of the safety seat; 7 - protecting element, which constitutes an external shield of selected parts of the device.

A protecting element 2, which is an integral part of the safety seat 1, is situated at the height of child's head. The safety seat 1 is provided with a system to adjust the height of the protecting element 2 according to child's dimensions. Flexible side protecting elements 3 and 4, which are parts of the protecting element 2, may come into direct contact with the child's head; they are made with the use of energy-absorbing material with carefully chosen characteristics. The side walls of the elements 3 and 4 have relatively low stiffness under a force applied in the direction perpendicular to the plane defined by the side walls of the safety seat. The force applied in this direction causes the elements 3 and 4 to be deformed, with their curvature being thus more or less changed, depending on the value and point of application of the force.

During a side impact, the side protecting element 3 or 4, situated on the side from which the vehicle is struck, undergoes controlled deformation in result of displacement of a movable element 6, which is a part of the side structure of the safety seat 1. The movable element 6 can rotate around an axis 5 perpendicular or almost perpendicular to the bottom plane of the safety seat.

The controlled deformation of the element 3 or 4 makes it possible to reduce the freedom of uncontrolled displacement of the child's head in relation to the torso and protects the child's head from direct contact with side elements of vehicle interior.

The structure of side walls of the safety seat 1 is provided with an additional protecting element 7 made of material having carefully chosen properties, which constitutes an external shield of selected parts of the device the invention is related to when the seat is normally used. During an accident, when the structure of the safety seat comes into direct contact with vehicle body parts, the protecting element 7 is deformed, which additionally improves the controlled displacement of the movable element 6.

## Claims

1. A child car seat comprising a seat bottom, a seat back, and a side structure and is provided with a device integral with the seat and reducing child's head displacement caused by a side impact of the motor vehicle, the seat further comprising the following elements: child's head protecting element (2), C-shaped, having a left side protecting element (3) and a right side protecting element (4) and fixed to the safety seat (1) to the upper part thereof, i.e. at the height of the head of a child sitting in the seat, as well as movable elements (6), which are parts of the side structure of the safety seat (1), and are situated outside of the left side protecting element (3) and the right side protecting element (4), on the left side and right side of these elements (3, 4), respectively, and arranged in such a way in relation to the side protecting elements (3, 4) that the left side protecting element (3) and the right side protecting element (4) are flexible and undergo controlled deformation in result of displacement of the movable elements (6), **characterized in that** the movable elements (6) can rotate around an axis (5) perpendicular or almost perpendicular to the safety seat bottom plane.

2. The seat according to claim 1, **characterized in that** the left side protecting element (3) and the right side protecting element (4) are deformable under a force applied in the direction perpendicular to the plane defined by the side walls of the safety seat (1) and this force causes the elements (3) and (4) to be deformed, with their curvature being thus changed, depending on the value and point of application of the force.

3. The seat according to claim 1 or 2, **characterized in that** when the motor vehicle is hit during a side impact from the left side then the movable element (6), which is a part of the left side structure of the safety seat (1), causes the left side protecting element (3), situated on the impact side, to be deformed towards the child's head and when the motor vehicle is hit during a side impact from the right side then the movable element (6), which is a part of the right side structure of the safety seat (1), causes the right side protecting element (4), situated on the impact side, to be deformed towards the child's head.

4. The seat according to claim 1, 2, or 3, **characterized in that** the movable element (6) is shielded by the protecting element (7), which is deformed during a side car impact, thus additionally improving the controlled displacement of the movable element (6).

## Patentansprüche

1. Ein Kindersitz beinhaltend einen Sitz und eine Rückenlehne und eine Seitenstruktur, und ausgestattet mit einer Vorrichtung mit dem Sitzeinrichtung integriert, die eine Verlagerung des Kinderkopfes aus eines Aufpralls von das Kraftfahrzeug vermindert, wobei der Sitz außerdem die folgenden Bestandteile beinhaltet: Kinderkopf-Schutzteil (2), dass C-förmig ist und ein linksseitiges Schutzelement, (3) sowie ein rechtsseitiges Schutzelement (4) aufweist und am oberen Teil des Sicherheitssitzes (1) befestigt ist, im Speziellen in der Höhe des Kopfes eines im Sitz sitzenden Kindes, sowie bewegliche Elemente (6), die Bestandteile einer Struktur des Sicherheitssitzes (1) sind, und sind außenseitig des linksseitigen Schutzelements (3) und des rechtsseitigen Schutzelements (4) links oder rechts gegenüber dieser Elemente (3, 4) angeordnet sind, und so derart im Verhältnis zu den seitlichen Schutzelementen (3, 4) positioniert sind, dass das linksseitige Schutzelement (3) und das rechtsseitige Schutzelement (4) elastisch sind und einer kontrollierbaren Verformung infolge der Verlagerung der beweglichen Elemente (6) unterliegen, **gekennzeichnet dadurch, dass** die beweglichen Elemente (6) um die zur Bodenebene des Sicherheitssitzes beinahe senkrechte Achse (5) rotieren können.

2. Sitz nach Anspruch 1, **gekennzeichnet dadurch, dass** das linksseitige Schutzelement (3) und das rechtsseitige Schutzelement (4) infolge einer zur durch die Seitenflanken des Sicherheitssitzes (1) aufgespannten Ebene senkrecht gerichtet aufgebrachte Kraft verformbar sind, welche Kraft diese Elemente (3) und (4) derart verformen lässt, dass deren Krümmung sich je nach dem Wert und dem Punkt der Kraftausübung ändert.

3. Sitz nach Anspruch 1 oder 2, **gekennzeichnet dadurch, dass** wenn das Kraftfahrzeug während eines Seitenaufpralls von der linken Seite getroffen wird, so bewirkt das bewegliche Element (6) das Bestandteil der linksseitigen Struktur des Sicherheitssitzes (1) ist, eine Verformung des von Seiten des Aufpralls situierten linksseitigen Schutzelements (3) in Richtung des Kinderkopfes, und wenn Kraftfahrzeug während eines Seitenaufpralls von der rechten Seite getroffen wird, so bewirkt das bewegliche Element (6) das Bestandteil der rechtsseitigen Struktur des Sicherheitssitzes (1) ist, eine Verformung des von Seiten des Aufpralls situierten rechtsseitigen Schutzelements (4) in Richtung des Kinderkopfes.

4. Sitz nach Anspruch 1, 2 oder 3, **gekennzeichnet dadurch, dass** das bewegliche Element (6) von einem Schutzelement (7) abgeschirmt wird, das während eines Seitenaufpralls gegen das Fahrzeug verformt wird, und somit zusätzlich die kontrollierbare Verlagerung des beweglichen Elements (6) verbessert.

## Revendications

1. Un siège d'auto pour enfants comprenant un fond de siège, un dossier de siège et une structure latérale, et est muni d'un dispositif solidaire du siège et réduisant le déplacement de la tête de l'enfant provoqué par une collision latérale du véhicule à moteur, le siège comprenant en outre les éléments suivants : un élément de protection (2) de la tête de l'enfant, en forme de C, comportant un élément de protection de côté gauche (3) et un élément de protection de côté droit (4) et fixé au siège de sécurité (1) à la partie supérieure de celui-ci, i.e. à la hauteur de la tête d'un enfant assis dans le siège, ainsi que des éléments mobiles (6) qui sont des parties de la structure latérale du siège de sécurité (1), et sont situés à l'extérieur de l'élément de protection de côté gauche (3) et de l'élément de protection de côté droit (4), sur le côté gauche et le côté droit de ces éléments (3, 4), respectivement, et agencés de telle manière par rapport aux éléments latéraux de protection (3, 4) que l'élément de protection de côté gauche (3) et l'élément de protection de côté droit (4) sont flexibles et subissent une déformation contrôlée à la suite du déplacement des éléments mobiles (6), **caractérisé en ce que** les éléments mobiles (6) peuvent tourner autour d'un axe (5) perpendiculaire ou presque perpendiculaire au plan de fond du siège de sécurité.

2. Le siège selon la revendication 1, **caractérisé en ce que** l'élément de protection de côté gauche (3) et l'élément de protection de côté droit (4) sont déformables sous une force appliquée dans la direction perpendiculaire au plan défini par les parois latérales du siège de sécurité (1) et cette force amène les éléments (3) et (4) à se déformer, avec leur courbure étant ainsi changée, en fonction de la valeur et le point d'application de la force.

3. Le siège selon la revendication 1 ou 2, **caractérisé en ce que** quand le véhicule à moteur est frappé lors d'une collision latérale depuis le côté gauche, alors l'élément mobile (6), qui est une partie de la structure du côté gauche du siège de sécurité (1), amène l'élément de protection de côté gauche (3), situé du côté de la collision, à se déformer vers la tête de l'enfant et quand le véhicule à moteur est frappé lors d'une collision latérale depuis le côté droit, alors l'élément mobile (6), qui est une partie de la structure du côté droit du siège de sécurité (1), amène l'élément de protection de côté droit (4), situé du côté de la collision, à se déformer vers la tête de l'enfant.

4. Le siège selon la revendication 1, 2 ou 3, **caractérisé en ce que** l'élément mobile (6) est protégé par l'élément de protection (7), qui se déforme lors d'une collision latérale du véhicule, améliorant ainsi en plus le déplacement contrôlé de l'élément mobile (6).
